# EUROPEAN PATENT APPLICATION

(11) **EP 2 879 403 A1**
(43) Date of publication of application: **03.06.2015**
(21) Application number: 13823357.2
(22) Date of filing: 13.06.2013
(51) Int. Cl.: H04R 3/00, H04B 1/40

(54) **DOWNLINK TRANSMISSION DEVICE FOR AUDIO SIGNAL AND ELECTRONIC SIGNATURE TOOL**

(30) Priority: 26.07.2012 CN 201220367193 U
(71) Applicant: Tendyron Corporation, Beijing 100083 (CN)
(72) Inventor: LI, Dongsheng, Beijing 100083 (CN)
(74) Representative: Pizzoli, Antonio
(86) International application number: PCT/CN2013/077154
(87) International publication number: WO 2014/015721

(57) **Abstract**

A downlink transmission device for an audio signal and an electronic signature tool comprising same. The downlink transmission device for an audio signal comprises: an audio interface (101), the audio interface (101) comprising a first pin (1), a second pin (2) and a third pin (3), the first pin (1) being one of a microphone pin and a ground pin, the second pin (2) being the other one of the microphone pin and the ground pin, the third pin (3) being a single-track audio output pin or one of multi-track audio output pins, and the audio signal being transmitted via the third pin (3); and an impedance circuit (102), one end of the impedance circuit (102) being coupled with the third pin (3), and the other end of the impedance circuit (102) being coupled with the first pin (1) and the second pin (2) separately. The downlink transmission device for an audio signal can ensure smooth downlink transmission of an audio signal, and ensure the data transmission quality.

## Description

### FIELD

The present disclosure relates to an electronic technique field, and more particularly relates to a downlink transmission device for audio signals and an electronic signature token.

### BACKGROUND

An existing audio signal sending device (such as a mobile phone terminal, a tablet computer, etc.) generally includes an audio interface. In order to perform different functions when the audio signal sending device is connected with an audio signal receiving device, an audio interface of the audio signal sending device is used to send audio signals. The audio signal receiving device may be an electronic signature token, an audio signal adapter device, or other audio signal receiving devices receiving and processing audio signals via an audio output pin.

Currently, an audio interface of an existing mobile terminal such as a mobile phone generally includes an audio output pin AUDIO, a ground pin GND and a microphone pin MIC. When the audio output pin is a single-channel pin, it only includes one audio output pin. When the audio output pin is a multi-channel pin, it includes multiple audio output pins. When the audio output pin is a stereo pin, it includes a left-channel pin and a right-channel pin. Certainly, when the audio output pin is the multi-channel pin or the stereo pin, it may use only one pin thereof to send signals.

However, a first pin and a second pin of an audio interface of different mobile terminals function differently, i.e. there are two types of audio interfaces, in which one type of audio interface has a first pin being a microphone pin MIC and a second pin being a ground pin GND, while the other type of audio interface has a first pin being ground pin GND and a second pin being a microphone pin MIC. In other words, sequences of the ground pin GND and the microphone pin MIC in these two types of audio interfaces are different.

When the audio signal sending device sends data to the audio signal receiving device, the audio output pin AUDIO and the ground pin GND need to be connected. As a sequence of the ground pin GND of the audio interface of the audio signal sending device is unknown, audio signal sending devices having different audio interfaces may be not capable of correctly sending a downlink signal to the audio signal receiving device.

### SUMMARY

Embodiments of the present disclosure seek to solve at least one of the problems existing in the related art to at least some extent.

Accordingly, a first objective of the present disclosure is to provide a downlink transmission device for audio signals, which ensures a successful downlink transmission of the audio signals and a data transmission quality.

A second objective of the present disclosure is to provide an electronic signature token.

In order to achieve the above objectives, embodiments of a first aspect of the present disclosure provide a downlink transmission device for audio signals. The downlink transmission device for audio signals comprises: an audio interface comprising a first pin, a second pin and a third pin, the first pin being one of a microphone pin and a ground pin, the second pin being the other one of the microphone pin and the ground pin, the third pin being a single-channel audio output pin or one of multichannel audio output pins and adapted to send the audio signal; and an impedance circuit defining a first terminal coupled with the third pin, and a second terminal coupled with the first pin and the second pin respectively.

With the downlink transmission device for audio signals according to embodiments of the present disclosure, by connecting the first pin and the second pin of the audio interface to form a short circuit, the audio output pin and the ground pin form a loop, thus ensuring a successful downlink transmission of the audio signals output from the audio interface and ensuring a data transmission quality.

The impedance circuit comprises at least one selected from a group consisting of: a resistor, a loudspeaker, a transformer, a resistor and a comparator connected in parallel, an inductor and a comparator connected in parallel, a resistor and an operational amplifier connected in parallel, and an inductor and an operational amplifier connected in parallel.

In an embodiment of the present disclosure, the impedance circuit comprises an amplifier and a resistor. The amplifier defines a positive input terminal coupled with the third pin of the audio interface, and a negative input terminal coupled with the first pin and the second pin of the audio interface respectively. The first pin and the second pin are connected to form a short circuit. The amplifier has an output terminal for outputting a downlink audio signal, and the resistor is coupled between the third pin and the short-circuited first pin and second pin.

In an embodiment of the present disclosure, the impedance circuit comprises an amplifier and an inductor. The amplifier defines a positive input terminal coupled with the third pin of the audio interface, and a negative input terminal coupled with the first pin and the second pin of the audio interface respectively. The first pin and the second pin are connected to form a short circuit. The amplifier comprises an output terminal for outputting a downlink audio signal, and the inductor is coupled between the third pin and the short-circuited first pin and the second pin.

In an embodiment of the present disclosure, the impedance circuit comprises a transformer. The transformer comprises a primary coil and a secondary coil for outputting a downlink audio signal. The primary coil defines a first terminal coupled with the third pin, and a second terminal coupled with the first pin and the second pin respectively. The first pin and the second pin are connected to form a short circuit.

In an embodiment of the present disclosure, the impedance circuit comprises an inductor and a comparator. The comparator defines a first input terminal coupled with the third pin of the audio interface, and a second input terminal coupled with the first pin and the second pin of the audio interface respectively. The first pin and the second pin are connected to form a short circuit. The comparator comprises an output terminal for outputting a downlink audio signal, and the inductor is coupled between the third pin and the short-circuited first pin and second pin.

In an embodiment of the present disclosure, the impedance circuit further comprises a resistor and a comparator. The comparator defines a first input terminal coupled with the third pin of the audio interface, and a second input terminal coupled with the first pin and the second pin of the audio interface respectively. The first pin and the second pin are connected to form a short circuit. The comparator comprises an output terminal for outputting a downlink audio signal, and the resistor is coupled between the third pin and the short-circuited first pin and second pin.

In an embodiment of the present disclosure, the audio interface further comprises a fourth pin. The fourth pin is the other one of the multichannel audio output pins and coupled with one of the first terminal and second terminal of the impedance circuit.

In order to achieve the above objectives, embodiments of a second aspect of the present disclosure provide an electronic signature token. The electronic signature token comprises a downlink transmission device for audio signals according to embodiments of the first aspect of the present disclosure.

With the electronic signature token according to embodiments of the present disclosure, the audio signals may be transmitted successfully, and the signal transmission quality is ensured.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions of embodiments made with reference to the drawings, in which:
Fig. 1A is a schematic diagram of a downlink transmission device for audio signals according to embodiments of the present disclosure;
Fig. 1B is a schematic diagram of a downlink transmission device for audio signals according to an embodiment of the present disclosure;
Fig. 2 is a schematic diagram of a downlink transmission device for audio signals according to an embodiment of the present disclosure;
Fig. 3 is a schematic diagram of a downlink transmission device for audio signals according to another embodiment of the present disclosure;
Fig. 4 is a schematic diagram of a downlink transmission device for audio signals according to a further embodiment of the present disclosure;
Fig. 5 is a schematic diagram of a downlink transmission device for audio signals according to yet another embodiment of the present disclosure;
Fig. 6 is a schematic diagram of a downlink transmission device for audio signals according to a still further embodiment of the present disclosure; and
Fig. 7 is a schematic diagram of an electronic signature token according to embodiments of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the spirit and scope of the present disclosure as defined by the claims.

A downlink transmission device for audio signals and an electronic signature token according to embodiments of the present disclosure are described below with reference to the drawings.

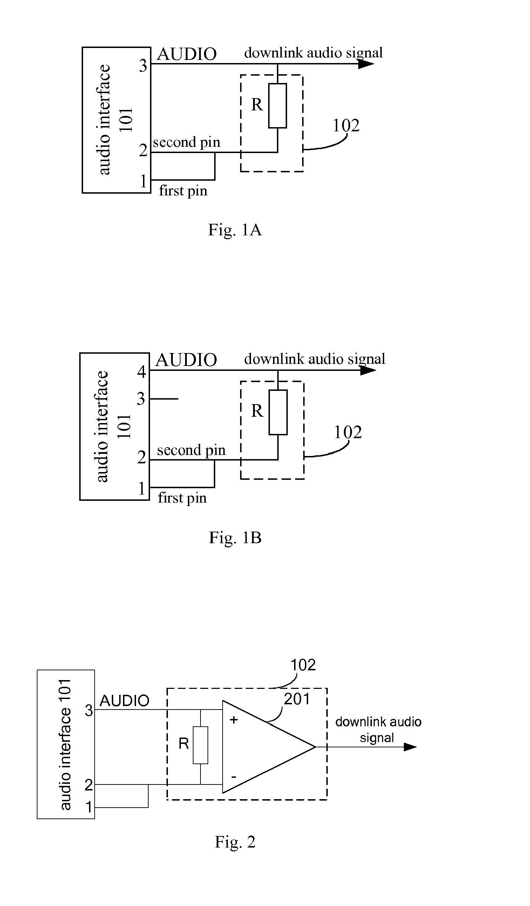

As shown in Fig. 1A, a downlink transmission device for audio signals according to embodiments of a first aspect of the present disclosure includes an audio interface 101 and an impedance circuit 102. The audio interface includes a first pin 1, a second pin 2 and a third pin 3. The first pin 1 is one of a microphone pin MIC and a ground pin GND, and the second pin is the other one of the microphone pin MIC and the ground pin GND. The third pin 3 is a single-channel audio output pin AUDIO or one of multichannel audio output pins AUDIO, and the audio signal is sent by the third pin 3. When the audio output pin AUDIO is a stereo pin, it generally includes a left-channel pin and a right-channel pin. A first terminal of the impedance circuit 102 is coupled with the third pin 3. It is to be understood that, when the audio interface 101 includes multichannel audio output pins AUDIO such as a left-channel pin and a right-channel pin, the first terminal of the impedance circuit 102 is coupled with any one of the multichannel audio output pins AUDIO. A second terminal of the impedance circuit 102 is coupled with the first pin 1 and the second pin 2 respectively. Therefore, the first pin 1 and the second pin 2 are connected to form a short circuit, and the third pin 3 and the ground pin GND form a loop via the impedance circuit 102.

In an embodiment of the present disclosure, as shown in Fig. 1B, the audio interface 101 further includes a fourth pin 4. The fourth pin 4 is the other one of the multichannel audio output pins AUDIO and coupled with one of the first terminal and second terminal of the impedance circuit 102.

It is to be illustrated that, a coupling includes a direct coupling and an indirect coupling, and the indirect coupling includes cases that two connecting parts are indirectly connected via other apparatus or circuits, in a condition that a technique principle of the a technical solution of the present disclosure is not affected. For example, in a condition of indirect coupling, apparatus, such as a resistor, an inductor, etc., may be connected between the two connecting parts.

The impedance circuit 102 may include at least one selected from a group consisting of: a resistor, a loudspeaker, a transformer, a resistor and a comparator connected in parallel, an inductor and a comparator connected in parallel, a resistor and an operational amplifier connected in parallel, and an inductor and an operational amplifier connected in parallel.

As shown in Fig. 2, the impedance circuit 102 includes an amplifier 201 and a resistor R. A positive input terminal (+) of the amplifier 201 is coupled with the third pin 3 of the audio interface 101, and a negative input terminal (-) of the amplifier 201 is coupled with the first pin 1 and the second pin 2 of the audio interface 101 respectively. The first pin 1 and the second pin 2 are connected to form a short circuit. A downlink audio signal is output by an output terminal of the amplifier 201. The resistor R is coupled between the third pin AUDIO and the short-circuited first pin and second pin.

In an embodiment of the present disclosure, a resistance of the resistor R ranges from 1Ω to 1kΩ, preferably from 10Ω to 100Ω.

Since the resistor R and the amplifier 201 are passive devices which have no power consumption during operation, the above-identified devices has no additional power consumptions.

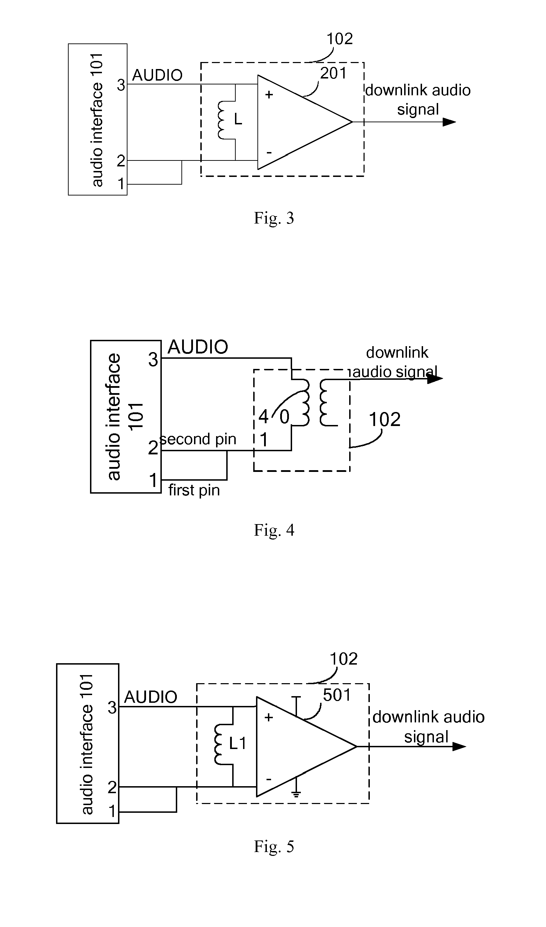

Preferably, as shown in Fig. 3, the resistor R is replaced with an inductor L. The positive input terminal (+) of the amplifier 201 is coupled with the third pin 3 of the audio interface 101, and the negative input terminal (-) of the amplifier 201 is coupled with the first pin 1 and the second pin 2 of the audio interface 101 respectively. The first pin 1 and the second pin 2 are connected to form a short circuit. A downlink audio signal is output by an output terminal of the amplifier 201. The inductor L is coupled between the third pin AUDIO and the short-circuited first pin and second pin.

In an embodiment of the present disclosure, the impedance circuit 102 is replaced with a transformer 401, as shown in Fig. 4. A first terminal of a primary coil of the transformer 401 is coupled with the third pin 3, and a second terminal of the primary coil of the transformer 401 is coupled with the first pin 1 and the second pin 2 of the audio interface 101 respectively. The first pin 1 and the second pin 2 are connected to form a short circuit. The downlink audio signal is output by a secondary coil of the transformer.

Further, in an embodiment of the present disclosure, as shown in Fig. 5, the impedance circuit 102 includes an inductor L1 and a comparator 501. A first input terminal (+) of the comparator 501 is coupled with the third pin 3 of the audio interface 101, and a second input terminal (-) of the comparator 501 is coupled with the first pin 1 and the second pin 2 of the audio interface 101 respectively. The first pin 1 and the second pin 2 are connected to form a short circuit. A downlink audio signal is output by an output terminal of the comparator. The inductor L1 is coupled between the third pin AUDIO and the short-circuited first pin and the second pin.

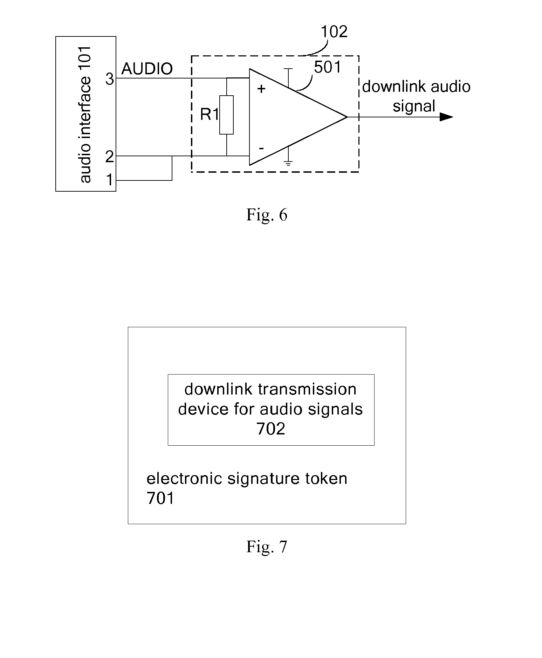

In addition, as shown in Fig. 6, the impedance circuit 102 may further include a resistor R1 and a comparator 501. A first input terminal (+) of the comparator 501 is coupled with the third pin 3 of the audio interface 101, and a second input terminal (-) of the comparator 501 is coupled with the first pin 1 and the second pin 2 of the audio interface 101 respectively. The first pin 1 and the second pin 2 are connected to form a short circuit. A downlink audio signal is output by an output terminal of the comparator. The resistor R1 is coupled between the third pin AUDIO and the short-circuited first pin and second pin.

With the downlink transmission device for audio signals according to embodiments of the present disclosure, by connecting the first pin and the second pin to form a short circuit, the audio output pin and the ground pin form a loop, thus ensuring a successful downlink transmission of the audio signal output from the audio interface and ensuring a data transmission quality.

As shown in Fig. 7, embodiments of a second aspect of the present disclosure provide an electronic signature token 701. The electronic signature token 701 includes the above-described downlink transmission device for audio signals 702.

With the electronic signature token according to embodiments of the present disclosure, the audio signals may be transmitted successfully, and the signal transmission quality is ensured.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in an embodiment," "in some embodiments," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments of the present disclosure have been shown and described, it would be appreciated by those skilled in the art that changes, modifications, alternatives, and variations can be made in the embodiments without departing from the spirit, principles and scope of the present disclosure, and the scope of the present disclosure is defined by the claims and equivalents thereof.

## Claims

1. A downlink transmission device for audio signals comprising:
an audio interface comprising a first pin, a second pin and a third pin, the first pin being one of a microphone pin and a ground pin, the second pin being the other one of the microphone pin and the ground pin, the third pin being a single-channel audio output pin or one of multichannel audio output pins and adapted to send the audio signal; and
an impedance circuit defining a first terminal coupled with the third pin, and a second terminal coupled with the first pin and the second pin respectively.

2. The downlink transmission device for audio signals according to claim 1, wherein the impedance circuit comprises at least one selected from a group consisting of: a resistor, a loudspeaker, a transformer, a resistor and a comparator connected in parallel, an inductor and a comparator connected in parallel, a resistor and an operational amplifier connected in parallel, and an inductor and an operational amplifier connected in parallel.

3. The downlink transmission device for audio signals according to claim 2, wherein the impedance circuit comprises an amplifier and a resistor, the amplifier defines a positive input terminal coupled with the third pin of the audio interface and a negative input terminal coupled with the first pin and the second pin of the audio interface respectively, the first pin and the second pin are connected to form a short circuit, the amplifier has an output terminal for outputting a downlink audio signal, and the resistor is coupled between the third pin and the short-circuited first pin and second pin.

4. The downlink transmission device for audio signals according to claim 2, wherein the impedance circuit comprises an amplifier and an inductor, the amplifier defines a positive input terminal coupled with the third pin of the audio interface and a negative input terminal coupled with the first pin and the second pin of the audio interface respectively, the first pin and the second pin are connected to form a short circuit, the amplifier comprises an output terminal for outputting a downlink audio signal, and the inductor is coupled between the third pin and the short-circuited first pin and second pin.

5. The downlink transmission device for audio signals according to claim 2, wherein the impedance circuit comprises a transformer, the transformer comprises a primary coil and a secondary coil for outputting a downlink audio signal, the primary coil defines a first terminal coupled with the third pin and a second terminal coupled with the first pin and the second pin respectively, the first pin and the second pin are connected to form a short circuit.

6. The downlink transmission device for audio signals according to claim 2, wherein the impedance circuit comprises an inductor and a comparator, the comparator defines a first input terminal coupled with the third pin of the audio interface and a second input terminal coupled with the first pin and the second pin of the audio interface respectively, the first pin and the second pin are connected to form a short circuit, the comparator comprises an output terminal for outputting a downlink audio signal, and the inductor is coupled between the third pin and the short-circuited first pin and second pin.

7. The downlink transmission device for audio signals according to claim 2, wherein the impedance circuit further comprises a resistor and a comparator, the comparator defines a first input terminal coupled with the third pin of the audio interface and a second input terminal coupled with the first pin and the second pin of the audio interface respectively, the first pin and the second pin are connected to form a short circuit, the comparator comprises an output terminal for outputting a downlink audio signal, and the resistor is coupled between the third pin and the short-circuited first pin and second pin.

8. The downlink transmission device for audio signals according to claim 2, wherein the audio interface further comprises a fourth pin, and the fourth pin is the other one of the multichannel audio output pins and coupled with one of the first terminal and second terminal of the impedance circuit.

9. An electronic signature token comprising a downlink transmission device for audio signals according to any of claims 1-8.
